(19) Europäisches Patentamt
European Patent Office
Office européen des brevets

(11) **EP 1 515 453 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(51) Int Cl.:
***H04B 1/707*** *(2011.01)*

(21) Anmeldenummer: 03020331.9

(22) Anmeldetag: **09.09.2003**

(54) **Verfahren zur Detektion eines Spreizspektrumsignals**

Method for detecting a spread spectrum signal

Procédé pour détection d'un signal à spectre étalé

(84) Benannte Vertragsstaaten:
**AT BE BG CY CZ DE DK EE ES FI FR GB GR HU IE IT LU MC NL PT RO SE SI SK TR**

(43) Veröffentlichungstag der Anmeldung:
**16.03.2005 Patentblatt 2005/11**

(73) Patentinhaber: **u-blox AG**
**8800 Thalwil (CH)**

(72) Erfinder:
• **Flammant, Pascal**
**8037 Zürich (CH)**
• **Thiel, Andreas**
**8006 Zürich (CH)**
• **Mathis, Heinz**
**8713 Uerikon (CH)**

(74) Vertreter: **Wagner, Wolfgang Heribert et al**
**Wagner Patent AG**
**Apollostrasse 2**
**Postfach 1021**
**8032 Zürich (CH)**

(56) Entgegenhaltungen:
**EP-A- 1 107 018     EP-A- 1 117 187**
**US-A- 6 144 691     US-A1- 2003 067 898**

• **DAFFARA F ET AL: "Improved search algorithm for fast acquisition in a DSP-based GPS receiver" SIGNALS, SYSTEMS, AND ELECTRONICS, 1998. ISSSE 98. 1998 URSI INTERNATIONAL SYMPOSIUM ON PISA, ITALY 29 SEPT.-2 OCT. 1998, NEW YORK, NY, USA,IEEE, US, 29. September 1998 (1998-09-29), Seiten 310-314, XP010316818 ISBN: 0-7803-4900-8**
• **STIRLING-GALLACHER R A ET AL: "A fast acquisition technique for a direct sequence spread spectrum signal in the presence of a large Doppler shift" SPREAD SPECTRUM TECHNIQUES AND APPLICATIONS PROCEEDINGS, 1996., IEEE 4TH INTERNATIONAL SYMPOSIUM ON MAINZ, GERMANY 22-25 SEPT. 1996, NEW YORK, NY, USA,IEEE, US, 22. September 1996 (1996-09-22), Seiten 156-160, XP010208642 ISBN: 0-7803-3567-8**

**Beschreibung**

**Technisches Gebiet**

Die Erfindung betrifft ein Verfahren zur Detektion eines Signals, welches eine Binärfolge enthält, die in einem Trägersignal codiert ist, gemäss dem Oberbegriff des Anspruchs 1. Solche Signale werden im GPS-System und ähnlichen Systemen, aber auch z.B. in der Mobiltelefonie benützt. Das erfindungsgemässe Verfahren kann in den entsprechenden Empfängern eingesetzt werden.

**Stand der Technik**

Es ist im Rahmen gattungsgemässer Verfahren bekannt, zur Detektion eines bestimmten Signals in einem Eingangssignal einen einzigen aus dem letzteren abgeleiteten Resultatwert mit einer Schwelle zu vergleichen.

Ein solches Verfahren zur Detektion eines Pilotsignals ist etwa aus US-6 144 691 A bekannt. Die Signaldetektion wird dann überprüft, indem mehrere gleiche Suchen nacheinander ausgeführt und Grössen sowie Fourier-Frequenzen und Code-Phasenlagen der maximalen Resultatwerte verglichen werden und das Resultat der Signaldetektion verworfen wird, wenn die besagten Werte nicht ausreichend konsistent sind.

Dieses Verfahren ist hinsichtlich der Wahrscheinlichkeit, dass ein vorhandenes Signal auch detektiert wird, nicht optimal.

Ein grundsätzlich ähnliches Verfahren, bei welchem Resultatwerte mit einer Rausch-Schwelle verglichen werden und bei Ueberschreiten derselben weiterhin darauf überprüft werden, ob der maximale Resultatwert eine weitere Schwelle überschreitet und ob Verzerrungen des Signals feststellbar sind, ist EP 1 117 187 A2 entnehmbar.

Bei einem weiteren Verfahren zur Detektion des Signals eines GPS-Satelliten (EP 1 107 018 A2) wird ebenfalls zur Ermittlung der Frequenz und der Code-Phasenlage des Signals ein maximaler Resultatwert ermittelt.

**Darstellung der Erfindung**

Der Erfindung liegt die Aufgabe zu Grunde, die Wahrscheinlichkeit der Detektion eines vorhandenen Signals bei vorgegebener Fehlalarmrate zu verbessern. Diese Aufgabe wird durch die Merkmale im Kennzeichen des Anspruchs 1 gelöst. Erfindungsgemäss wird aus den vorher bestimmten Resultatwerten mindestens ein Ausdruck gebildet, der von mindestens zwei hinsichtlich Dopplerverschiebung oder Code-Phasenlage benachbarten Resultatwerten abhängt. Da in hinreichender Nähe des Optimums liegende Resultatwerte tendenziell erhöht sind, wird dadurch eine praktisch bedeutsame Verbesserung der Signaldetektion erzielt, die Detektionen auch unter ungünstigeren Bedingungen zulässt oder sonst Suchzeiten beträchtlich abkürzen kann.

**Kurze Beschreibung der Zeichnungen**

Im folgenden wird die Erfindung anhand von Figuren, welche lediglich ein Ausführungsbeispiel darstellen, näher erläutert. Es zeigen

Fig. 1     ein Hochfrequenzteil eines erfindungsgemässen Empfängers,

Fig. 2     ein Basisbandteil des besagten Empfängers mit einer Detektionsschaltung,

Fig. 3     den Graphen der durch Code-Phasenverschiebung verursachten Signalabschwächung,

Fig. 4     den Graphen der durch Dopplerverschiebung verursachten Signalabschwächung und

Fig. 5     die logische Verknüpfung von Bedingungen zu einem Detektionssignal.

**Wege zur Ausführung der Erfindung**

Das erfindungsgemässe Verfahren sowie eine Detektionsschaltung zu ihrer Ausführung und andere Teile werden im folgenden am Beispiel eines GPS-Empfängers dargestellt. Verfahren und Detektionsschaltung eignen sich jedoch für alle Anwendungen, bei denen Daten CDMA-codiert übertragen werden.

Beim GPS-System kommen bei der Bildung des von einem Satelliten ausgesandten Signals auf Gold-Folgen beruhende Codes zum Einsatz. Bei den Gold-Folgen handelt sich um Pseudo-Zufallsfolgen, deren Glieder, Chips genannt, die Werte +1 und -1 annehmen. Jeder von z.B. 32 Satelliten sendet eine für ihn charakteristische Gold-Folge der Länge 1'023 aus, welche jeweils in einem sinusförmigen Trägersignal von 1'575,42 MHz phasencodiert ist und ständig wiederholt wird. Die Aussendung eines Exemplars der Gold-Folge dauert 1 ms, die Uebertragungszeit für einen Chip beträgt also den 1'023. Teil davon, d.h. etwas weniger als 1 µs. Die Gold-Folgen sind ihrerseits von Datenbits überlagert, welche sich in einer Multiplikation der Gold-Folge mit +1 oder -1 niederschlagen und die sich jeweils über zwanzig Glieder der Folge, also über 20 ms erstrecken.

Als Voraussetzung für die Decodierung eines von einem Satelliten ausgesandten Signals muss dasselbe zuerst einmal detektiert werden. Diese Aufgabe wird durch verschiedene Randbedingungen erschwert. Da stets ein starkes Hintergrundrauschen vorhanden ist, müssen zur Vermeidung häufiger Fehlalarme, bei denen Vorhandensein eines Signals angezeigt wird, obwohl keines vorliegt, die Detektionskriterien einigermassen streng sein. Das Signal unterliegt ausserdem einer durch die Bewegung der Satelliten verursachten Dopplerverschiebung, die über einen verhältnismässig grossen Frequenzbereich streuen kann. Auch ist die Phasenlage des Codes eines Satelliten nicht a priori bekannt und schon geringe Phasenverschiebungen zwischen dem im empfangenen Signal enthaltenen Code und einem im Empfänger erzeugten internen Code führen zu starker Abschwächung oder Auslöschung der zur Signaldetektion ermittelten Grössen. Bei der Detektion eingesetzte Zeitfenster ziehen weitere Abschwächungen nach sich.

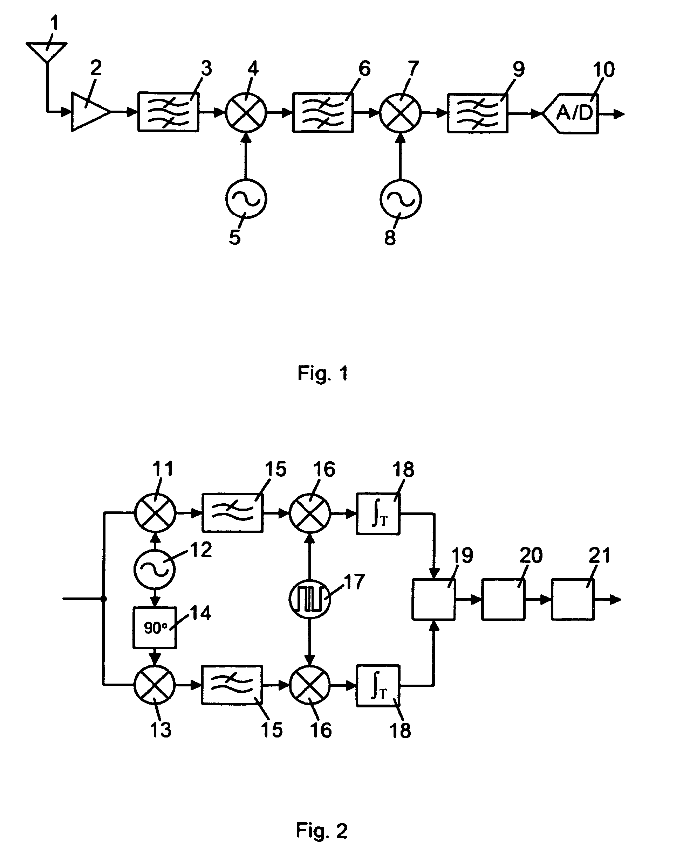

Der in Fig. 1, 2 dargestellte Teil eines zur Ausführung des erfindungsgemässen Verfahrens geeigneten GPS-Empfängers weist ein Hochfrequenzteil (Fig. 1) auf mit einer Antenne 1 zum Empfang der von den GPS-Satelliten ausgesandten Signale, auf welche ein rauscharmer selbstregulierender Verstärker 2 und ein Bandpassfilter 3 folgen. Darauf folgen eine erste Mischerstufe mit einem Mischer 4, der das verstärkte und gefilterte empfangene Signal mit einem von einem Oszillator 5 erzeugten Sinussignal von 1'391,82 MHz mischt und einem Bandpassfilter 6 sowie eine grundsätzlich gleich aufgebaute zweite Mischerstufe mit einem Mischer 7, der das Signal mit einem von einem Oszillator 8 erzeugten Sinussignal der Frequenz 180.6 MHz mischt und einem Bandpassfilter 9. Auf die beiden Mischerstufen folgt schliesslich ein A/D-Wandler 10.

Im Basisbandteil (Fig. 2) verzweigt sich der Signalpfad in einen I- und einen Q-Pfad mit jeweils einer weiteren Mischstufe. Im I-Pfad liegt ein Mischer 11, in welchem das Signal mit einem von einem Oszillator 12 erzeugten Sinussignal von ca. 3 MHz gemischt wird, während in der zweiten ein weiterer, im übrigen gleicher Mischer 13 liegt, in welchem das gleiche Signal mit dem durch einen Phasenschieber 14 um 90° phasenverschobenen Sinussignal des Oszillators 12 gemischt wird. Auf die Mischer 11, 13 folgt jeweils ein Tiefpassfilter 15. Nach demselben kann sich der Signalpfad auf mehrere, z.B. 32 Pfade verzweigen, deren jeder einem bestimmten Satelliten zugeordnet ist. In jedem Pfad folgt, parallel zu anderen, hier nicht dargestellten Schaltungsteilen, die der Verarbeitung des Signals dienen, jedenfalls eine Detektionsschaltung mit einem weiteren Mischer 16, welcher das Signal mit dem Ausgangssignal eines Codegenerators 17 mischt. Er erzeugt einen internen Code, welcher auf der einem bestimmten Satelliten zugeordneten Gold-Folge beruht.

Das Ausgangssignal des Mischers 16 wird ausgewertet, indem es in einem Integrator 18 jeweils über 256 aufeinanderfolgende Zeitintervalle der Länge T=31,25 µs integriert wird. Der gesamte Integrationszyklus dauert also 8 ms und erstreckt sich somit über acht aufeinanderfolgende Exemplare der jeweiligen Gold-Folge. Im vom Codegenerator 17 erzeugten Code wird die Gold-Folge ständig wiederholt und an die Mischer 16 geleitet, wobei nach jeder Auswertung, d.h. nach acht aufeinanderfolgenden Exemplaren der Gold-Folge eine zeitliche Verschiebung um einen halben Chip vorgenommen wird. Dies ist nötig, weil, wie oben erwähnt, die Phasenlage der Gold-Folge im Eingangssignal nicht bekannt ist und daher die Phasenlage der Gold-Folge im vom Codegenerator 17 erzeugten Code so lange variert werden muss, bis ein ausreichender Grad von Uebereinstimmung erzielt wird. Wegen der Autokorrelations-Eigenschaften von Gold-Folgen ist nur dann eine Detektion zu erwarten, wenn die Code-Verschiebung, d.h. die zeitliche Verschiebung zwischen der im Empfangssignal codierten Gold-Folge und der im intern erzeugten Code codierten Gold-Folge kleiner als eine Chiplänge ist.

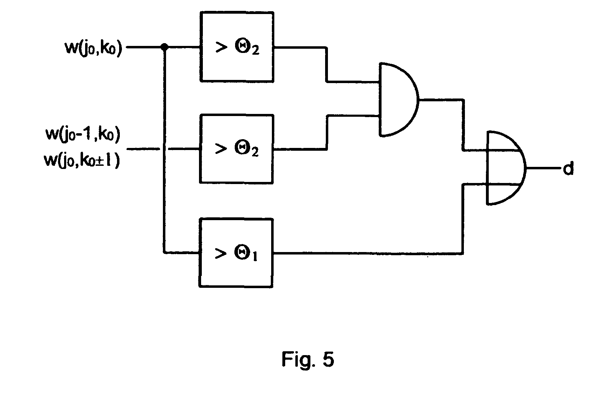

Die 2x256 Ausgangswerte gelangen jeweils in einen Speicher 19, in welchem die zeitgleichen von den Mischern 11, 13 herstammenden Signale jeweils zu einem komplexen Wert zusammengefasst werden. Die 256 komplexen Werte werden dann in einer Fourier-Schaltung 20 einer schnellen Fourier-Transformation (fast Fourier transform FFT) unterworfen. Von den ebenfalls 256 komplexen Ausgangswerten wird dann jeweils der Betrag berechnet und die sich ergebenden Resultatwerte an eine Auswertungsschaltung 21 weitergegeben, welche aus ihnen ableitet, ob ein Signal detektiert wurde oder nicht und gegebenenfalls ein je nachdem negatives oder positives Detektionssignal d (Fig. 5) erzeugt.

Der Anteil des Eingangssignals, der von einem bestimmten Satelliten stammt, hat grundsätzlich die Form

$$(1) \quad s_0(t) = X(t) \cos(2\pi f_0 t)$$

Dabei ist $X(t)$ das binäre Signal, das der Ueberlagerung des die Gold-Folge des Satelliten wiederholenden Codes mit Datenbits entspricht. $f_0$ ist die in der Regel Dopplerverschobene Trägerfrequenz.

Durch die Mischer 4, 7 und 11 bzw. 13 werden daraus die Signale

$$(2) \quad s_1^I(t) = X(t) \cos(2\pi f_1 t + \varphi) \cos(2\pi f_0 t)$$

$$= \tfrac{1}{2} X(t) [\cos(2\pi(f_1+f_0)t+\varphi) + \cos(2\pi(f_1-f_0)t+\varphi)]$$

$$s_1^Q(t) = X(t) \sin(2\pi f_1 t+\varphi) \cos(2\pi f_0 t)$$

$$= \tfrac{1}{2} X(t) [\sin(2\pi(f_1+f_0)t+\varphi) + \sin(2\pi(f_1-f_0)t+\varphi)]$$

erzeugt, wobei die lokale Frequenz $f_1$ die Summe der Frequenzen der Oszillatoren 5, 8, und 12 ist und $\varphi$ die Phasenverschiebung des lokal erzeugten sinusförmigen Signals gegenüber dem Trägersignal. Nach dem Tiefpass 15, der jeweils nicht physisch implementiert zu sein braucht, da er sich aus den Systemeigenschaften von selbst ergibt, bleibt davon

$$(3) \quad s_2^I(t) = \tfrac{1}{2} X(t) \cos(2\pi(f_1-f_0)t+\varphi)$$

$$s_2^Q(t) = \tfrac{1}{2} X(t) \sin(2\pi(f_1-f_0)t+\varphi)$$

übrig.

Nach den Mischern 16 liegen daher die Signale

$$(4) \quad s_3^I(\Delta_X,t) = \tfrac{1}{2} X(t) X(t+\Delta_X) \cos(2\pi(f_1-f_0)t+\varphi)$$

$$s_3^Q(\Delta_X,t) = \tfrac{1}{2} X(t) X(t+\Delta_X) \sin(2\pi(f_1-f_0)t+\varphi)$$

vor, wobei $\Delta_X$ die Code-Phasenverschiebung, d.h. die Differenz der Phasenlagen zwischen dem im Signal enthaltenen Code und dem intern erzeugten Code bedeutet. Vom Einfluss, den Datenbitwechsel während eines Integrationszyklus haben können, wird im folgenden abgesehen, da der Abstand zwischen zwei Datenbitwechseln im Durchschnitt 30 ms beträgt und die Wahrscheinlichkeit, dass ein Wechsel in einen Integrationszyklus fällt, daher jeweils nur etwa ein Viertel beträgt.

Der Integrator 18 im oberen Pfad erzeugt die Folge

$$(5) \quad s_4^I(\Delta_X,n) = \tfrac{1}{2} \int_{(n-1)T}^{nT} X(t) X(t+\Delta_X) \cos(2\pi(f_1-f_0)t+\varphi) \, dt.$$

Durch partielle Integration wird daraus

$$(6) \quad s_4{}^I(\Delta_X,n) \; \approx \; \tfrac{1}{2} \; (1-|\Delta_X|/D) \int_{(n-1)T}^{nT} \cos(2\pi(f_1-f_0)\,t+\varphi) \; dt$$

D ist die Chiplänge. Dabei wurde berücksichtigt, dass

$$(7) \quad \int (X(t) \; X(t+\Delta_X) \; dt \; \approx \; 1-|\Delta_X|/D, \; \text{falls} \; |\Delta_X|<D$$

$$\int (X(t) \; X(t+\Delta_X) \; dt \; \approx \; 0 \; \text{sonst}$$

Daraus ergibt sich für $|\Delta_X|<D$ schliesslich

$$(8) \quad s_4{}^I(\Delta_X,n) \; = \; T/2 \; (1-|\Delta_X|/D) \; \mathrm{sinc}((f_1-f_0)T)$$
$$\cos(2\pi(n-\tfrac{1}{2})(f_1-f_0)T+\varphi)$$

$$s_4{}^Q(\Delta_X,n) \; = \; T/2 \; (1-|\Delta_X|/D) \; \mathrm{sinc}((f_1-f_0)T)$$
$$\sin(2\pi(n-\tfrac{1}{2})(f_1-f_0)T+\varphi)$$

$s_4{}^Q(\Delta_X,n)$ ergibt sich auf analoge Weise wie $s_4{}^I(n)$.
Daraus kann man nun die komplexen Werte

$$(9) \quad s_4(\Delta_X,n) \; = \; T/2 \; (1-|\Delta_X|/D) \; \mathrm{sinc}((f_1-f_0)T)$$
$$[\cos(2\pi(n-\tfrac{1}{2})(f_1-f_0)T+\varphi)+i\;\sin(2\pi(n-\tfrac{1}{2})(f_1-f_0)T+\varphi)]$$
$$= \; T/2 \; (1-|\Delta_X|/D) \; \mathrm{sinc}((f_1-f_0)T) \; e^{2\pi i(n-\frac{1}{2})(f1-f0)T+\varphi}$$

zusammensetzen. Fourier-Transformation in der Fourier-Schaltung 20 und Betragsbildung führt schliesslich auf ein Feld von positiven reellen Grundwerten:

$$(10) \; S(\Delta_X,k) \; = \; |\hat{s}_4(\Delta_X,k)| \; = \; MT/2 \; (1-|\Delta_X|/D) \; |\mathrm{sinc}(\Delta_F T)|$$
$$|\mathrm{sinc}(M\delta_F T)|$$

mit $k=-M/2,...,M/2-1$, wobei im Beispiel M=256. Dabei ist $\Delta_F = f_1-f_0$ und $\delta_F = \Delta_F - k/MT$. Der Grundwert hängt also von zwei Variablen $\Delta_X$ und k ab. Wenn die Phasenlage der intern erzeugten Binärfolge jeweils um D/2 verändert wird, so ergibt sich mit $\delta_X = \Delta_X - jD/2$ das folgende zweidimensionale Feld von Grundwerten:

$$(11) \quad S(j,k) = MT/2 \ (1-|\delta_X|/D) \ |\text{sinc}(\Delta_F T)| \ |\text{sinc}(M\delta_F T)| \ \text{falls}$$
$$|\delta_X| < D,$$
$$S(j,k) = 0 \ \text{sonst}$$

mit $j = 0, \ldots, 2'045$.

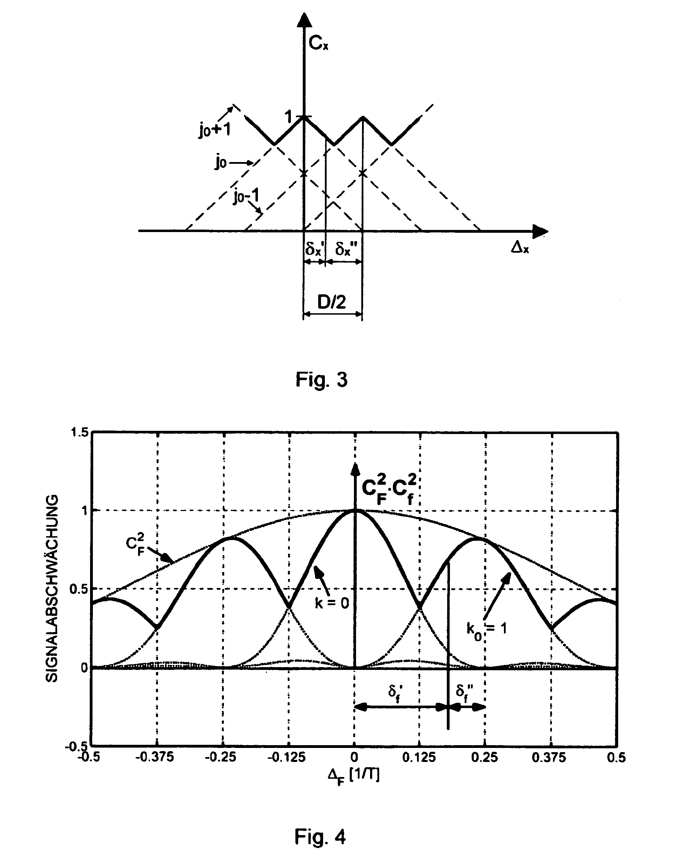

Der Grundwert wird somit durch drei Faktoren geschwächt, die jeweils $\leq 1$ sind. Der erste (Fig. 3) spiegelt die Code-Verschiebung wider, der zweite (Fig. 4) stammt von der Integration des Signals und der Differenz zwischen der Trägerfrequenz des empfangenen Signals und der Summe der Frequenzen der intern erzeugten Signale der Oszillatoren 5, 8, 12 her, die im wesentlichen der Dopplerverschiebung der Trägerfrequenz entspricht und der dritte hängt am Abstand der besagten Differenz von der diskreten Fourier-Frequenz k/MT. Der dritte Faktor ist sehr klein, wenn nicht $|\delta_F| \leq 1/MT$ gilt, d.h. für einen bestimmten Wert von $\Delta_F$ ist S(j,k) nur für diejenigen k's, für die k/MT dem besagten Wert unmittelbar benachbart ist, so gross, dass seine Berücksichtigung sinnvoll ist.

Wegen des hohen Rauschanteils entsprechen die aus dem Eingangssignal gemäss dem oben erläuterten Verfahren abgeleiteten Resultatwerte w(j,k), die die Grundlage für die Signaldetektion in der Auswertungsschaltung 21 bilden, nicht den oben angegebenen Grundwerten. Die Grundwerte definieren jeweils lediglich eine Modifikation der Wahrscheinlichkeitsverteilungen, denen die Resultatwerte unterliegen.

Bei Abwesenheit eines Signals sind die Komponenten von $\hat{s}_4(\Delta_x, k)$ jeweils Gauss-verteilt mit einer Varianz $\sigma$, so dass sich für die Resultatwerte eine Raileigh-Verteilung ergibt entsprechend

$$(12) \quad p_0(r) = r/\sigma^2 \times \exp(-r^2/2\sigma^2)$$

Für den oberhalb einer Schwelle $\Theta$ liegenden Anteil ergibt sich daraus

$$(13) \quad Q_0(\Theta) = \int_{\Theta}^{\infty} p_0(r) dr = \exp[-\Theta^2/(2\sigma^2)]$$

Die Wahrscheinlichkeitsverteilung für den Resultatwert w bei vorhandenem Signal, also positivem Grundwert S ist jeweils eine Rice-Verteilung

$$(14) \quad p_1(S,r) = r/\sigma^2 \times \exp[-(r^2+S^2)/(2\sigma^2)] \times I_0(rS/\sigma^2)$$

Der oberhalb einer Schwelle $\theta$ liegende Anteil ergibt sich hier zu

$$(15) \quad Q_1(S,\Theta) = (S/\Theta)^2 \ \exp[-(S^2+\Theta^2)/(2\sigma^2)] \times \sum_{k=0}^{\infty} I_k(S\Theta/\sigma^2)$$

Die Rice-Verteilung kann für $S > 5\sigma$ approximativ als eine um S verschobene Gauss-Verteilung dargestellt werden:

$$(16)\ p_1(S,r)\ \approx\ 1/\sqrt{2\pi}\ \times\ \sigma^{-1}\ \times\ \exp[-(r-S)^2/(2\sigma^2)]$$

Mit dieser Näherung kann auch $Q_1(S,\Theta)$ leichter ausgewertet werden.Insbesondere gilt dann

$$(17)\ Q_1(S,\Theta) = \int_{\Theta}^{\infty} p_1(S,r)\,dr\ =\ Q(\Theta-S)$$

mit

$$(18)\ Q(\Theta)\ =\ 1/\sqrt{2\pi}\ \times\ \sigma^{-1}\ \times\ \int_{\Theta}^{\infty} \exp[-r^2/(2\sigma^2)]\,dr$$

S unterliegt jedoch, da die Code-Phasenlage und die Dopplerverschiebung nicht bekannt sind, selbst einer Wahrscheinlichkeitsverteilung. Genauer wird S, wie oben (s. (11)) dargestellt, von drei Faktoren beeinflusst, welche jeweils von einem Parameter abhängen, der einer Wahrscheinlichkeitsverteilung unterworfen ist. Der erste dieser Faktoren ist (Fig. 3)

$$(19)\ C_X(x_1)\ =\ 1-x_1\ \text{mit}\ x_1=|\delta_X|/D,\ \text{falls}\ x_1 \leq 1$$

Geht man davon aus, dass nur derjenige Resultatwert einen nennenswerten Beitrag zur Detektionswahrscheinlichkeit liefert, der dem grössten Werte von $C_x$ entspricht, so gilt $x_1 < 0,25$ und da Gleichverteilung anzunehmen ist, ergibt sich für die Wahrscheinlichkeitsdichte von $x_1$:

$$(20)\ p_X(x_1)\ =\ 4,\ \text{falls}\ 0 \leq x_1 \leq 0,25$$
$$p_X(x_1)\ =\ 0\ \text{sonst}$$

Der zweite Faktor ist (s. Fig. 4)

$$(21)\ C_F(x_2)\ =\ |\text{sinc}(x_2)|\ \text{mit}\ x_2=\Delta_F T$$

Auch hier ist Gleichverteilung anzunehmen und somit

$$(22)\ p_F(x_2)\ =\ 2,\ \text{falls}\ 0 \leq x_2 \leq 0,5$$
$$p_F(x_2)\ =\ 0\ \text{sonst}$$

Der dritte Faktor schliesslich ist (Fig. 4, Darstellung mit M=4 statt M=256)

$$(23)\ C_f(x_3)\ =\ |\text{sinc}(x_3)|\ \text{mit}\ x_3=M|\delta_F|T$$

Geht man wieder davon aus, dass nur solche Resultatwerte einen nennenswerten Beitrag liefern, bei denen $0 \leq x_3 \leq 0,5$ gilt und nimmt im übrigen Gleichverteilung an, so erhält man wiederum

$$(24) \quad p_f(x_3) = 2, \text{ falls } 0 \leq x_3 \leq 0,5$$
$$p_f(x_3) = 0 \text{ sonst}$$

Für die Dichte der Wahrscheinlichkeitsverteilung des Resultatwerts w ergibt sich daraus nach (16):

$$(25) \quad p_1(S,r)$$

$$= 1/\sqrt{2\pi} \times \sigma^{-1} \times \int_0^{0,25} \int_0^{0,5} \int_0^{0,5} \exp(-[r-C_X(x_1)C_F(x_2)C_f(x_3)S]^2/2\sigma^2)$$

$$p_X(x_1)p_F(x_2)p_f(x_3)\,dx_3 dx_2 dx_1$$

$x_2$ und $x_3$ sind zwar über $\Delta_F$ miteinander verknüpft, doch ändert sich $x_2$ um den Faktor M langsamer als $x_3$, so dass man in guter Näherung annehmen kann, dass die entsprechenden Faktoren und Wahrscheinlichkeitsverteilungen voneinander unabhängig sind.

In (25) kann man nun eine Variablentransformation durchführen, indem man die Parameter $x_1$, $x_2$, $x_3$ durch die Faktoren $C_X$, $C_F$ und $C_f$ ersetzt, wobei man für die Umkehrung von sinc(x) diese Funktion durch ein Polynom 4. Ordnung approximiert, d.h.

$$(26) \quad u = \mathrm{sinc}(x) \approx 1-(\pi x)^2/6+(\pi x)^4/120$$

Dies führt auf

$$(27) \quad x = [10-\sqrt{(120u-20)}]/\pi$$

Drückt man ausserdem $C_X$, $C_F$ und $C_f$ jeweils in Dezibel aus, d.h. führt man jeweils die Variablentransformation

$$(28) \quad u = 20\log_{10}(y)$$

durch, so erhält man schliesslich unter Verwendung von (16) für (25)

$$(29) \quad p_1(S,r)$$

$$= 1/\sqrt{2\pi} \times \sigma^{-1} \times \int_{-\infty}^{\infty} \exp(-[r-10^{1/20}S]^2/2\sigma^2)\, p_L(l)\,dl$$

mit

$$(30)\quad p_L(l) \;=\; \int_{-\infty}^{\infty}\int_{-\infty}^{\infty} p_C(y_1)\,p_D(y_2)\,p_D(1-y_1-y_2)\,dy_2\,dy_1$$

Dabei gilt

$$(31)\quad p_C(y) \;=\; 0,2\ln(10)\,\times\,10^{y/20},\quad \text{falls } -2,5\le y\le 0$$
$$p_C(y) \;=\; 0 \text{ sonst}$$

und

$$(32)\quad p_D(y) \;=\; \ln(10)/(40\pi)\,\times\,[(\pi x)^4-20(\pi x)^2+120]/[(\pi x)^3-10\pi x],$$
$$\text{falls } -3,92\le y\le 0$$
$$p_D(y) \;=\; 0 \text{ sonst}$$

Für die Wahrscheinlichkeit dafür, dass ein aus dem Eingangssignal abgeleiteter Resultatwert w oberhalb einer Schwelle $\Theta_1$ liegt, ergibt sich

$$(33)\quad P_1(S,\Theta_1) \;=\; \int_{\Theta_1}^{\infty} p_1(S,r)\,dr$$

$$=\; 1/\sqrt{2\pi}\,\times\,\sigma^{-1}\,\times\,\int_{\Theta_1}^{\infty}\int_{-\infty}^{\infty} \exp(-[r-10^{1/20}S]^2/2\sigma^2)\,p_L(l)\,dl\,dr$$

$$=\; \int_{-\infty}^{\infty} p_L(l)\,Q(\Theta_1-10^{1/20}S)\,dl$$

Falls auch S in Dezibel ausgedrückt wird, also $S=10^{R/20}$, so ergibt sich

$$(34)\quad P_1(R,\Theta_1) \;=\; \int_{-\infty}^{\infty} p_L(l)\,Q(\Theta_1-10^{(1+R)/20})\,dl$$

Erfindungsgemäss wird neben einem maximalen Resultatwert w $(j_0, k_0)$, der in der Regel bei der interessierenden Komponente des Eingangssignals nächstkommender Code-Phasenlage ($j_0$ in Fig. 3) und Fourier-Frequenz ($k_0=1$ in Fig. 4) auftritt, ein zweiter, bei gleicher Fourier-Frequenz hinsichtlich Code-Phasenlage benachbarter Resultatwert w $(j_0\pm1,k_0)$ oder auch - je nach gewählter Verfahrensweise - ein bei gleicher Code-Phasenlage hinsichtlich der Fourier-Frequenz benachbarter Resultatwert $w(j_0,k_0\pm1)$ berücksichtigt, der gewöhnlich der zweitnächsten Code-Phasenlage ($j_0$-1 in Fig. 3) bzw. der zweitnächsten Fourier-Frequenz ($k_0$-1=0 in Fig. 4) entspricht.
Im ersten Fall werden etwa zu einer bestimmten Code-Phasenlage $j_0$ die den verschiedenen Fourier-Frequenzen zugeordneten Resultatwerte berechnet und festgestellt, ob ein $k_0$ existiert mit $w(j_0,k_0)>\Theta_1$. Ist dies der Fall, so wird von der Auswertungsschaltung 21 ein positives Detektionssignal d erzeugt und der Detektionsvorgang ist beendet. Andernfalls wird untersucht, ob für ein $k_0$ sowohl der Resultatwert $w(j_0, k_0)$ als auch der bereits berechnete und im Speicher 20 verfügbare zur voraufgehenden Code-Phasenlage $j_0$-1 und zur gleichen Fourier-Frequenz $k_0$ gehörende Resultatwert w($j_0$-1, $k_0$) beide grösser als eine niedrigere Schwelle $\Theta_2$ sind, also min(w($j_0$,$k_0$),w($j_0$-1,$k_0$))>$\Theta_2$. In diesem Fall wird ebenfalls ein positives Detektionssignal d erzeugt und der Vorgang beendet. Andernfalls werden die der nächsten Code-Phasenlage $j_0$+1 entsprechenden Resultatwerte berechnet und so verfahren wie vorher mit den der Code-Phasenlage $j_0$ zugehörigen usw. bis zur Erzeugung eines positiven Detektionssignals d oder Erreichen einer Zeitlimite.

Für die Wahrscheinlichkeitsverteilung von hinsichtlich der Code-Phasenlage benachbarten Resultatwerten w(j-1,k), w(j,k) ist zu beachten, dass die Faktoren $C_X$, die in die Grundwerte S(j-1,k) und S(j,k) eingehen, nicht unabhängig sind. Da die zeitliche Verschiebung zwischen zwei aufeinanderfolgenden internen Codes j-1, j jeweils D/2 beträgt, gilt (Fig. 3) für die Differenzen $\delta x'$ , $\delta x''$ der Code-Phasenlage des Signals von der Code-Phasenlage des unmittelbar voraufgehenden ($j_0$-1) und unmittelbar folgenden ($j_0$) intern erzeugten Codes

$$\left|\delta_X{'}\right| + \left|\delta_X{''}\right| = D/2$$

und damit für die entsprechenden Werte von $x_1$:

$$(35) \quad x_1{'} + x_1{''} = 0,5$$

Für $y_1{'}$=20$\log_{10}$($C_X$($x_1{'}$)) und $y_1{''}$=20$\log_{10}$($C_X$($x_1{''}$)), also jeweils in Dezibel-Darstellung, ergibt sich damit aus (19):

$$(36) \quad y_1{''} = 20\log_{10}(1,5-10^{y_1{'}/20})$$

Wegen dieser Abhängigkeit können für einen einzelnen Resultatwert daher auch nicht wie in (30) alle Wahrscheinlichkeitsverteilungen zusammengefasst werden, sondern nur

$$(37) \quad p_{LC}(1) = \int_{-\infty}^{\infty} \int_{-\infty}^{\infty} p_D(y)\, p_D(1-y)\, dy$$

Betrachtet man Resultatwerte, die unmittelbar aufeinanderfolgenden Fourier-Frequenzen bei gleicher Code-Phasenlage entsprechen, so sind die Faktoren $C_f$ der entsprechenden Grundwerte S(j,k-1) und S(j,k) nicht unabhängig voneinander. Es gilt bei etwa (Fig. 4) zwischen ($k_0$-1)/MT und $k_0$/MT liegender Dopplerverschiebung für die Abweichungen $\delta_f{'}$ von ($k_0$-1)/MT und $\delta_f{''}$ von $k_0$/MT offensichtlich $\left|\delta_f{'}\right| + \left|\delta_f{''}\right| = 1/MT$, d.h.

$$(38) \quad x_3{'} + x_3{''} = 1$$

Daraus erhält man für $y_3{'}$=20$\log_{10}$($C_f$($x_3{'}$)) und $y_3{''}$=20$\log_{10}$($C_f$($x_3{''}$)) unter Berücksichtigung von (27), (28)

$$(39) \quad y_3{''} = 20\log_{10}[\text{sinc}(1-\pi^{-1}\sqrt{[6(1-10^{y_3{'}/20})]}]$$

Wiederum kann man für die einzelnen Resultatwerte nur die zwei übrigen Wahrscheinlichkeitsverteilungen zusammenfassen:

$$(40) \quad p_{LD}(l) = \int_{-\infty}^{\infty} \int_{-\infty}^{\infty} p_C(y) p_D(l-y) \, dy$$

Für die Wahrscheinlichkeit dafür, dass beide Resultatwerte über einer Schwelle $\Theta_2$ liegen, gilt im ersten der beschriebenen Fälle:

$$(41) \quad P_{C2}(R,\Theta_2) = \int_{-\infty}^{\infty} \int_{-\infty}^{\infty} p_C(y') p_{LC}(l) Q(\Theta_2 - 10^{(l+y'+R)/20})$$
$$\times \, Q(\Theta_2 - 10^{(l+y''(y')+R)/20}) \, dl \, dy'$$

y"(y') ist dabei durch (36) gegeben. Im zweiten Fall gilt, mit y"(y') gemäss (39):

$$(42) \quad P_{D2}(R,\Theta_2) = \int_{-\infty}^{\infty} \int_{-\infty}^{\infty} p_D(y') p_{LD}(l) Q(\Theta_2 - 10^{(l+y'+R)/20})$$
$$\times \, Q(\Theta_2 - 10^{(l+y''(y')+R)/20}) \, dl \, dy'$$

Für die Wahrscheinlichkeit, dass ein Resultatwert w(j,k) eine erste Schwelle $\Theta_1$ übertrifft oder derselbe sowie der hinsichtlich Code-Phasenlage unmittelbar voraufgehende und zur gleichen Fourier-Frequenz gehörige Resultatwert w(j-1,k) beide eine tiefere Schwelle $\Theta_2$ übertreffen (Fig. 5), also dass das Detektionskriterium

$$(43) \quad w(j,k) > \Theta_1 \ \text{oder} \ \min(w(j,k), w(j-1,k)) > \Theta_2$$

gilt, so ergibt sich die Detektionswahrscheinlichkeit zu

$$(44) \quad P_{C1,2}(R,\Theta_1,\Theta_2) = \int_{-\infty}^{\infty} \int_{-\infty}^{\infty} p_C(y') p_{LC}(l)$$
$$\times \, \{ Q(\Theta_1 - 10^{(l+y'+R)/20}) + [Q(\Theta_2 - 10^{(l+y'+R)/20}) - Q(\Theta_1 - 10^{(l+y'+R)/20})]$$
$$\times \, Q(\Theta_2 - 10^{(l+y''(y')+R)/20}) \} \, dl \, dy'$$

Wird unter Heranziehung von Resultatwerten w(j,k-1), w(j,k), die zu unmittelbar aufeinanderfolgenden Fourier-Frequenzen und zur gleichen Code-Phasenlage gehören, die gleiche Bedingung angewendet so erhält man für die Detektionswahrscheinlichkeit

$$(45) \quad P_{D1,2}(R,\Theta_1,\Theta_2) = \int_{-\infty}^{\infty} \int_{-\infty}^{\infty} p_D(y') p_{LD}(l)$$
$$\times \, \{ Q(\Theta_1 - 10^{(l+y'+R)/20}) + [Q(\Theta_2 - 10^{(l+y'+R)/20}) - Q(\Theta_1 - 10^{(l+y'+R)/20})]$$
$$\times \, Q(\Theta_2 - 10^{(l+y''(y')+R)/20}) \} \, dl \, dy'$$

Beim Vergleich verschiedener Detektionskriterien muss natürlich berücksichtigt werden, dass die gewählten Bedingungen auch die Fehlalarmrate, d.h. die Wahrscheinlichkeit, dass ein positives Detektionssignal d erzeugt wird, obwohl kein Signal vorliegt, beeinflussen. Ein Vergleich ist nur dann aussagekräftig, wenn die Fehlalarmrate konstant gehalten wird. Erfolgt eine Detektion, wenn ein Resultatwert eine Schwelle $\Theta_1$ übersteigt, so beträgt die Fehlalarmrate

$$(46) \quad P_{F1}(\Theta_1) = Q_0(\Theta_1) = \int_{\Theta_1}^{\infty} p_0(r)\,dr = \exp[-\Theta_1^2/(2\sigma^2)]$$

Besteht die Detektionsbedingung darin, dass zwei Resultatwerte jeweils eine Schwelle $\Theta_2$ übersteigen, dann ergibt sich, da die Wahrscheinlichkeitsverteilungen bei Abwesenheit eines Signals unabhängig sind:

$$(47) \quad P_{F2}(\Theta_2) = Q_0(\Theta_2)^2 = \exp(-\Theta_2^2/\sigma^2)$$

Für die Fehlalarmrate bei Anwendung der Bedingung gemäss (43) ergibt sich

$$(48) \quad P_{F1,2}(\Theta_1,\Theta_2) = Q(\Theta_1) + [Q(\Theta_2) - Q(\Theta_1)]Q(\Theta_2)$$
$$= \exp(-\Theta_1^2/\sigma^2) + [\exp(-\Theta_2^2/\sigma^2) - \exp(-\Theta_1^2/\sigma^2)]\exp(-\Theta_2^2/\sigma^2)$$

Setzt man $P_{F1,2}$ konstant, z.B. indem man festlegt, dass unter hundert Auswertungen im Mittel genau ein Fehlalarm vorkommen darf, was zur Bedingung

$$(49) \quad P_{F1,2} = (100 \times 2046 \times 256)^{-1} = 1,9 \times 10^{-8}$$

führt, so ergibt sich aus (48) eine Relation zwischen $\Theta_1$ und $\Theta_2$. Dies erlaubt eine Optimierung der Detektionswahrscheinlichkeit bei gegebener Fehlalarmrate, indem $\Theta_1$ und $\Theta_2$ derart gemeinsam verändert werden, dass die Relation erfüllt bleibt. Als günstig haben sich bei Heranziehung von bezüglich der Codeverschiebung benachbarten Resultatwerten die Werte $\Theta_1 = 6,06\sigma$ und $\Theta_2 = 4,33\sigma$ erwiesen. Bei Heranziehung bezüglich der Fourier-Frequenz benachbarter Resultatwerte haben sich die Werte $\Theta_1 = 6,00\sigma$ und $\Theta_2 = 4,44\sigma$ bewährt. $\Theta_1$ wurde also um einen Faktor von 1,4 bzw. 1,35 grösser gewählt als $\Theta_2$. Faktoren grösser als 1,0 und nicht grösser als 2,1 dürften im allgemeinen zu brauchbaren Resultaten führen.

Es wurde gefunden, dass bei der oben angegebenen Wahl der Schwellen die Bedingung nach (43), wo sowohl einzelne Resultatwerte mit der grösseren Schwelle als auch zwei hinsichtlich der Code-Phasenlage unmittelbar benachbarte Resultatwerte mit der kleineren Schwelle verglichen wurden, also der von den beiden Resultatwerten w(j-1,k), w(j,k) abhängige Ausdruck min(w(j-1,k),w(j,k)) zusätzlich herangezogen wurde, zu einer deutlichen Verbesserung des Detektionsverhaltens führte. So wurden im Vergleich mit der herkömmlichen Methode, bei welcher lediglich einzelne Resultatwerte herangezogen und mit einer Schwelle verglichen werden, bestimmte Detektionswahrscheinlichkeiten stets bei schwächerem Signal erreicht. Für eine Detektionswahrscheinlichkeit von 90% genügte ein um ca. 1dB schwächeres Signal.

Bei zusätzlicher Berücksichtigung von zwei hinsichtlich der Fourier-Frequenz anstatt hinsichtlich der Code-Phasenlage unmittelbar benachbarten Resultatwerten w(j,k-1), w(j,k) ergab sich ebenfalls eine Verbesserung, doch war sie weniger ausgeprägt.

Es ist möglich, dass, vor allem bei kleinerem Inkrement der Code-Phasenlage, der Einbezug von mehr als zwei Resultatwerten weitere Verbesserungen zur Folge hat. Es ist auch denkbar, andere von mehreren Resultatwerten abhängige Ausdrücke als gemäss (43) zu verwenden, z.B. mehrere Resultatwerte zu summieren - eventuell mit unterschiedlicher Gewichtung - und das Ergebnis mit einer Schwelle zu vergleichen. Schliesslich können auch Ausdrücke verwendet werden, die von ein zweidimensionales Feld benachbarter Werte bildenden Resultatwerten abhängen, z.B. Quadrupel von jeweils zu zwei benachbarten Code-Phasenlagen und zwei benachbarten Fourier-Frequenzen gehörigen Resultatwerten.

**Bezugszeichenliste**

| | |
|---|---|
| 1 | Antenne |
| 2 | Verstärker |
| 3 | Bandpassfilter |
| 4 | Mischer |
| 5 | Oszillator |
| 6 | Bandpassfilter |
| 7 | Mischer |
| 8 | Oszillator |
| 9 | Bandpassfilter |
| 10 | A/D-Wandler |
| 11 | Mischer |
| 12 | Oszillator |
| 13 | Mischer |
| 14 | Phasenschieber |
| 15 | Tiefpassfilter |
| 16 | Mischer |
| 17 | Code-Generator |
| 18 | Integrator |
| 19 | Speicher |
| 20 | Fourier-Schaltung |
| 21 | Auswertungsschaltung |

**Patentansprüche**

1. Verfahren zur Detektion eines Signals, welches eine ständig wiederholte Binärfolge als Code enthält, die in einem sinusförmigen Trägersignal codiert ist, in einem Empfänger, indem das Eingangssignal des Empfängers einer Transformation unterworfen wird, die aus dem Trägersignal ein niederfrequentes I-Signal und Q-Signal erzeugt, dasselbe mit lokal erzeugten Kopien des Codes verschiedener Phasenlagen, welche jeweils um höchstens eine Chiplänge (D) gegeneinander verschoben sind, multipliziert und das Produkt jeweils über eine Anzahl aufeinanderfolgender Intervalle jeweils integriert und der je vom I-Signal und dem Q-Signal abgeleitete Wert zu einem komplexen Wert zusammengefasst wird und darauf die Folge dieser Werte einer diskreten FourierTransformation unterworfen und durch Ermittlung der Beträge ein zweidimensionales Feld von reellen Resultatwerten ($w(j,k)$) hergestellt wird, die von der Phasenlage des Codes und von der Fourier-Frequenz abhängen, und jeweils überprüft wird, ob mindestens ein von mindestens einem der Resultatwerte ($w(j,k)$) abgeleiteter Ausdruck jeweils eine ihm zugeordnete Schwelle überschreitet und, sobald eine solche Ueberschreitung festgestellt wird, ein Beitrag zu einem positiven Detektionssignal ($d$) geliefert wird, **dadurch gekennzeichnet, dass** mindestens ein auf Überschreiten der ihm zugeordneten Schwelle überprüfter Ausdruck von mindestens zwei hinsichtlich der Phasenlage des Codes unmittelbar benachbarten und zur gleichen Fourier-Frequenz gehörigen Resultatwerten ($w(j,k)$, $w(j-1,k)$) oder von mindestens zwei hinsichtlich der Fourier-Frequenz unmittelbar benachbarten und zur gleichen Phasenlage des Codes gehörigen Resultatwerten ($w(j,k-1)$, $w(j,k)$) abhängt.

2. Verfahren nach Anspruch 1, **dadurch gekennzeichnet, dass** ein Ausdruck dem Minimum mindestens zweier Resultatwerte ($w(j,k)$, $w(j-1,k)$), die hinsichtlich der Phasenlage des Codes unmittelbar benachbart sind und zur gleichen Fourier-Frequenz gehören, entspricht.

3. Verfahren nach Anspruch 1, **dadurch gekennzeichnet, dass** ein Ausdruck dem Minimum mindestens zweier Resultatwerte ($w(j,k-1)$, $w(j,k)$), die hinsichtlich der Fourier-Frequenz unmittelbar benachbart sind und zur gleichen Phasenlage des Codes gehören, entspricht.

4. Verfahren nach Anspruch 2 oder 3, **dadurch gekennzeichnet, dass** ein weiterer Ausdruck einem einzigen Resultatwert ($w(j,k)$) entspricht und die ihm zugeordnete Schwelle ($\Theta_1$) höher ist als die dem erstgenannten Ausdruck

zugeordnete Schwelle ($\Theta_2$).

5. Verfahren nach Anspruch 4, **dadurch gekennzeichnet, dass** sich die zweite Schwelle ($\Theta_1$) von der ersten Schwelle ($\Theta_2$) um einen Faktor unterscheidet, der zwischen 1,0 und 2,1 liegt.

6. Verfahren nach Anspruch 4 oder 5, **dadurch gekennzeichnet, dass** die Ergebnisse der Ueberprüfungen, ob die Ausdrücke die zugehörigen Schwellen ($\Theta_1$, $\Theta_2$) überschreiten, zur Erzeugung des Detektionssignals (d) oder-verknüpft werden.

7. Verfahren nach einem der Ansprüche 1 bis 6, **dadurch gekennzeichnet, dass** sich benachbarte Phasenlagen des Codes jeweils um höchstens die Hälfte der Chiplänge (D) unterscheiden.

**Claims**

1. A method for detecting a signal containing a continuously repeated binary sequence as a code, the sequence being encoded in a sinusoidal carrier signal, in a receiver, by subjecting the input signal of the receiver to a transformation producing a low-frequency I signal and Q signal from the carrier signal, multiplying the same with locally generated copies of the code in different phase positions which are shifted with respect to one another by at most one chip length (D), and in each case integrating the product over a number of subsequent intervals and combining the respective value derived from the I signal and the Q signal into a complex value, and subsequently subjecting the sequence of these values to a discrete Fourier transformation and generating a two-dimensional array of real result values (w(j,k)) depending on the phase position of the code and on the Fourier frequency by determining the absolute values, and by checking whether at least one expression derived from at least one of the result values (w(j,k)) exceeds an associated threshold, and, if such a case is detected, providing a contribution to a positive detection signal (d), **characterised in that** at least one expression that has been checked for exceeding the associated threshold depends on at least two result values (w(j,k), w(j-1,k)) immediately adjacent with respect to the phase position of the code and belonging to the same Fourier frequency, or on at least two result values (w(j,k-1), w(j,k)) immediately adjacent with respect to the Fourier frequency and belonging to the same phase position of the code.

2. The method according to claim 1, **characterised in that** an expression corresponds to the minimum of at least two result values (w(j,k), w(j-1,k)) which are immediately adjacent with respect to the phase position of the code and belong to the same Fourier frequency.

3. The method according to claim 1, **characterised in that** an expression corresponds to the minimum of at least two result values (w(j,k-1), w(j,k)) which are immediately adjacent with respect to the Fourier frequency and belong to the same phase position of the code.

4. The method according to claim 2 or 3, **characterised in that** an additional expression corresponds to a single result value (w(j,k)) and that the threshold ($\Theta_1$) associated therewith is higher than the threshold ($\Theta_2$) associated with the first-mentioned expression.

5. The method according to claim 4, **characterised in that** the second threshold ($\Theta_1$) differs from the first threshold ($\Theta_2$) by a factor lying between 1.0 and 2.1.

6. The method according to any one of claims 4 or 5, **characterised in that** the results of the checks whether the expressions exceed the associated thresholds ($\Theta_1$, $\Theta_2$) are logically linked by an OR function to produce the detection signal (d).

7. The method according to any one of claims 1 to 6, **characterised in that** adjacent phase positions differ in each case by at most half the chip length (D).

**Revendications**

1. Procédé de détection, dans un récepteur, d'un signal contenant, comme code, une séquence binaire répétée en permanence et codée dans un signal porteur sinusoïdal, en soumettant le signal d'entrée du récepteur à une transformation qui génère un signal I et un signal Q basse fréquence à partir du signal porteur, et les multipliant par des copies du code à positions de phase différentes, décalées d'une longueur de chip (D) au maximum les unes par rapport aux autres, en intégrant en tout cas le produit sur un nombre d'intervalles successifs et regroupant les valeurs obtenues à partir du signal I et du signal Q en une valeur complexe, la séquence de ces valeurs étant ensuite soumise à une transformation discrète de Fourier et un champ bidimensionnel de valeurs réelles de résultats (w(j, k)), qui sont fonction de la position de phase du code et de la fréquence de Fourier, étant établi par détermination des modules, en vérifiant en tout cas si une expression obtenue à partir d'au moins une des valeurs de résultats (w(j,k)) dépasse un seuil qui lui est affecté et en fournissant une contribution à un signal de détection positif (d) si un tel dépassement est constaté, **caractérisé en ce qu'**au moins une expression pour laquelle il est vérifié si elle dépasse un seuil qui lui est affecté dépend d'au moins deux valeurs de résultats (w(j,k), w(j-1,k)) directement voisines par rapport à la position de phase du code et appartenant à la même fréquence de Fourier ou d'au moins deux valeurs de résultats (w(j,k-1), w(j,k)) directement voisines par rapport à la fréquence de Fourier et appartenant à la même position de phase du code.

2. Procédé selon la revendication 1, **caractérisé en ce qu'**une expression correspond au minimum d'au moins deux valeurs de résultats (w(j,k), w(j-1,k)) directement voisines par rapport à la position de phase et appartenant à la même fréquence de Fourier.

3. Procédé selon la revendication 1, **caractérisé en ce qu'**une expression correspond au minimum d'au moins deux valeurs de résultats (w(j,k-1), w(j,k)) directement voisines par rapport à la fréquence de Fourier et appartenant à la même position de phase du code.

4. Procédé selon l'une des revendications 2 ou 3, **caractérisé en ce qu'**une autre expression correspond à une seule valeur de résultats (w(j,k)) et **en ce que** le seuil ($\theta_1$) qui lui est attribué est supérieur au seuil ($\theta_2$) de l'expression citée en premier.

5. Procédé selon la revendication 4, **caractérisé en ce que** le deuxième seuil ($\theta_1$) diffère du premier seuil ($\theta_2$) d'un facteur compris entre 1,0 et 2,1.

6. Procédé selon l'une des revendications 4 ou 5, **caractérisé en ce que** les résultats des vérifications pour savoir si les expressions dépassent les seuils ($\theta_1$, $\theta_2$) qui leur sont affectés sont combinés en OU pour la génération d'un signal de détection (d).

7. Procédé selon l'une des revendications 1 à 6, **caractérisé en ce que** des positions de phase du code voisines diffèrent en tout cas de la moitié au maximum de la longueur de chip (D).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6144691 A
- EP 1117187 A2
- EP 1107018 A2